**Europäisches Patentamt**

**European Patent Office**

**Office européen des brevets**

(11) Veröffentlichungsnummer: **0 137 939**
A2

# (12) EUROPÄISCHE PATENTANMELDUNG

(21) Anmeldenummer: 84109205.9

(22) Anmeldetag: 03.08.84

(51) Int. Cl.⁴: **F 02 P 15/10**

(30) Priorität: 02.09.83 DE 3331695

(71) Anmelder: **ROBERT BOSCH GMBH, Postfach 50, D-7000 Stuttgart 1 (DE)**

(43) Veröffentlichungstag der Anmeldung: **24.04.85 Patentblatt 85/17**

(84) Benannte Vertragsstaaten: **DE FR GB IT**

(72) Erfinder: **Herden, Werner, Dr., Höderlinstrasse 5, D-7016 Gerlingen (DE)**

(54) Verfahren und Einrichtung zum Zünden brennfähiger Gemische.

(57) Es wird ein Verfahren zum Zünden brennfähiger Gemische insbesondere in Brennkraftmaschinen vorgeschlagen, bei dem die Energieabgabe des Zündfunkens im wesentlichen in der Durchbruchsphase der Anfangsphase des Zündfunkens erfolgt und das eine jedem Betriebspunkt angepaßte Geschwindigkeit der Flammenfront ermöglicht. Dazu wird die Zahl der Funkendurchbrüche von Zustandsgrößen des Gemischs oder von Betriebsparametern der Brennkraftmaschine abhängig gemacht. Mit dem vorgeschlagenen Verfahren läßt sich eine günstige Beeinflussung des Brennablaufs vor allem für Kraftfahrzeugmotoren erreichen.

Vetter

R. 19925

07. Juli 1983  ch/dö

ROBERT BOSCH GMBH, 7000 STUTTGART 1

Verfahren und Einrichtung zum Zünden brennfähiger
Gemische

Stand der Technik

Die Erfindung geht aus von einem Verfahren zum Zünden
brennfähiger Gemische, insbesondere zum Erzeugen von
Zündfunken für Brennkraftmaschinen, nach der Gattung
des Hauptanspruchs.

Zum Zünden eines brennfähigen Gemischs kann eine
elektrische Entladung zwischen Zündelektroden verwendet
werden. In Brennkraftmaschinen sind solche Zündelektroden
in eine Zündkerze integriert. Durch eine elektrische
Entladung über die Zündkerze wird das brennfähige
Gemisch im Brennraum entflammt. Dabei ist es von Wichtigkeit, daß die Entflammung zu einem definierten Zeitpunkt stattfindet und daß sich die Flammenfront im Gemisch
möglichst rasch ausbreitet.

Eine elektrische Entladung an der Zündkerze, die mit
Hilfe einer zugehörigen Zündvorrichtung bewirkt wird,
ist nun aber im allgemeinen kein so klar überschaubarer
Vorgang wie beispielsweise ein elektrischer Rechteckimpuls. Während der Ausbildung eines Zündfunkens können
nämlich drei Phasen unterschieden werden, die man als
Durchbruchsphase, als Bogenphase und als Glimmphase
bezeichnet hat. In den einzelnen Phasen finden unterschiedliche Energieumsätze statt. Die Ausbildung der
jeweiligen Phasen hängt beispielsweise von der Geometrie
der Zündelektroden und ihrer Beschaltung ab. Wird an
die Zündelektroden eine mit Hilfe der Zündvorrichtung
erzeugte Hochspannung angelegt, dann bildet sich nach
dem Überschreiten der Durchbruchsspannung zwischen den
Zündelektroden ein elektrisch leitender Plasmakanal.
Dabei können sehr hohe Ströme über die Funkenstrecke
zwischen den Zündelektroden fließen.

An die Durchbruchsphase schließt sich je nach der
Beschaltung der Zündkerze zunächst die Bogenphase an.
Die Bogenentladung fließt in dem vorher erzeugten
Plasmakanal. Die Brennspannung liegt bei verhältnismäßig niedrigen Werten, die Ströme sind jedoch anfangs
sehr hoch.

Ist der Strom in der Bogenentladung unter einen bestimmten
Wert abgesunken, reißt der Bogen ab. Es schließt sich dann
die Glimmphase an. Der relativ kleine Strom der Glimmentladung fließt ebenfalls durch das schon erzeugte Plasma,
die Brennspannung liegt über dem Wert der Brennspannung
der Bogenentladung.

In der Durchbruchsphase ist die Wärmebelastung der Zündelektroden sehr gering, in der Bogenphase
führt die Wärmezufuhr zu den Zündelektroden jedoch
zu der bekannten Erosion der Zündelektroden. Weiter hat
sich herausgestellt, daß das in der Durchbruchsphase
aktivierte und später durch sie entflammte Gemischvolumen
größer ist als die von der Bogenentladung oder Glimmentladung aktivierten Volumina. Gegenüber der Bogenphase
und der Glimmphase bewirkt somit die Durchbruchsphase
offensichtlich den schnellsten Reaktionsablauf. Damit
ist auch in der Durchbruchsphase die Entflammungssicherheit
des Gemischs im Vergleich zu den beiden anderen Phasen am
höchsten.

Diese Überlegungen führten zu dem Versuch, den Zündelektroden möglichst in der Durchbruchsphase die gesamte
Energie zuzuführen. Ein Verfahren und eine Einrichtung zur
Durchführung eines solchen Verfahrens sowie Zündkerzen,
die für ein derartiges Verfahren besonders geeignet sind,
sind in der DE-OS 28 10 159 vorgestellt. Bei diesem
bekannten Verfahren erfolgt die Energieabgabe möglichst
ausschließlich in der Durchbruchsphase der Anfangsphase,
nämlich im Funkenkopf. Die dort geschilderte Durchbruchszündung stabilisiert die Entflammung des Gemischs und
beschleunigt die Flammenfront im Vergleich zu herkömmlichen
Verfahren.

- 4 -

Beim Betrieb einer Brennkraftmaschine treten nun aber
unterschiedliche Lastzustände auf. Bei Vollast beispielsweise ist das Gemisch fett und es liegt ein hoher Füllungsgrad vor. Die Zündung eines solchen Gemischs ist unproblematisch, ein beschleunigter Energieumsatz ist gar nicht
wünschenswert. Läuft die Brennkraftmaschine dagegen bei
niedriger Last, im Leerlauf oder gar im Schub, dann
sinkt die Temperatur im Brennraum und der Druck fällt ab.
Das Gemisch ist mager, es ist eine schlechte Füllung
gegeben, es treten Inhomogenitäten im Gemisch auf. Die
Folgen davon sind Schwierigkeiten bei der Entflammung und
langsame Brennverläufe.

Vorteile der Erfindung

Das erfindungsgemäße Verfahren mit den kennzeichnenden
Merkmalen des Hauptanspruchs hat demgegenüber den Vorteil,
daß eine praktisch jedem Gemischzustand angepaßte
Geschwindigkeit der Flammenfront erzielt werden kann.
Dies geschieht durch ein Anpassen der Zahl der Funkendurchbrüche an den Gemischzustand.

Durch die in den Unteransprüchen aufgeführten Maßnahmen
sind vorteilhafte Weiterbildungen und Verbesserungen des
im Hauptanspruch angegebenen Verfahrens möglich. Die
Anpassung der Geschwindigkeit der Flammenfront durch eine
Steuerung oder Regelung der Zahl der Funkendurchbrüche
ist auch bei einer Brennkraftmaschine abhängig von ihren
Betriebsparametern möglich.

In vorteilhafter Weise werden bei Teillastbetrieb, Leerlaufbetrieb und Schubbetrieb, also bei mageren Gemischen,
eine Mehrzahl von Funkendurchbrüchen vorgesehen, bei

0137939

R.

Vollastbetrieb und fetten Gemischen dagegen sieht man
nur einen einzigen Funkendurchbruch vor.

Vorteilhaft hat sich erwiesen, im Fall einer Mehrzahl
von Funkendurchbrüchen die einzelnen Durchbrüche in einem
Abstand von weniger als zweihundert Mikrosekunden folgen
zu lassen. Dies erhöht die Genauigkeit des Zündzeitpunkts.

Weiter von Vorteil ist, die Zahl der Funkendurchbrüche
durch Zustandsgrößen des Gemischs zu regeln oder durch die
Betriebszustände der Brennkraftmaschine selbsttätig zu
steuern.

Weitere Vorteile des erfindungsgemäßen Verfahrens und
Vorteile der Einrichtung zum Durchführen des Verfahrens
ergeben sich aus der Zeichnung und der Beschreibung.

Zeichnung

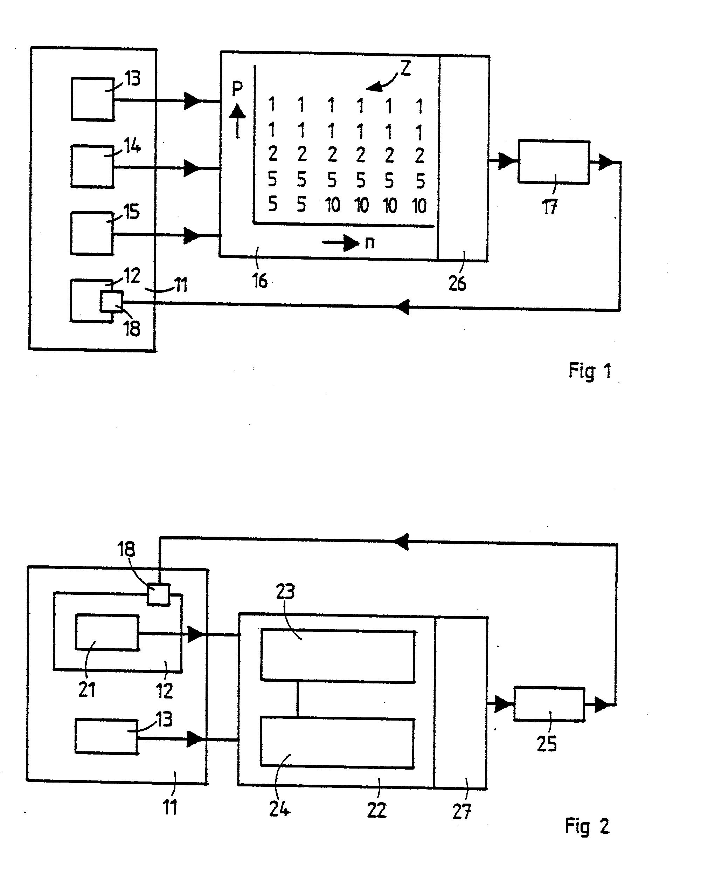

Ausführungsbeispiele der Erfindung sind in der Zeichnung
dargestellt und in der nachfolgenden Beschreibung näher
erläutert. Figur 1 zeigt ein Blockschaltbild einer Einrichtung zum Steuern der Zahl der Funkendurchbrüche in
einem Gemisch, Figur 2 zeigt ein Blockschaltbild einer
Einrichtung zum Regeln der Funkendurchbrüche. Beide
Ausführungsbeispiele sind in Verbindung mit einer Brennkraftmaschine dargestellt.

Beschreibung der Ausführungsbeispiele

In Figur 1 ist eine Brennkraftmaschine 11 mit einem
Brennraum 12 versehen. Der Brennraum 12 symbolisiert einen
der Maschinenzylinder. Die Brennkraftmaschine 11 trägt
eine Reihe von Sensoren, nämlich einen Drehzahlsensor 13,

0137939

R.

der zweckmäßigerweise mit einer Bezugsmarke versehen
ist, einen Lastsensor 14 und einen Temperatursensor 15.
Weiter ist ein Steuergerät 16 vorgesehen. Die Ausgänge
der Sensoren 13, 14 und 15 sind mit entsprechenden Eingängen des Steuergeräts 16 verbunden. An den Ausgang
des Steuergeräts 16 ist eine Zündspule 17 angeschlossen.
Die Zündspule ihrerseits steht in Wirkungsverbindung
mit einer Zündkerze 18, die in den Brennraum 12 ragt.

Im Steuergerät 16 wird nach Maßgabe der Ausgangssignale
der drei Sensoren 13, 14 und 15 die Zahl der Funkendurchbrüche festgelegt. In Figur 1 ist im Steuergerät 16 als
Beispiel die Zuordnung der Zahl z der Funkendurchbrüche
in Abhängigkeit von der Maschinendrehzahl n und der
Maschinenlast P angedeutet.

Die Steuerung erfolgt in Abhängigkeit von den Eingangsgrößen Maschinenlast (Lastsensor 14), Maschinendrehzahl
(Drehzahlsensor 13) und Maschinentemperatur (Temperatursensor 15). Je kleiner die Maschinenlast P und je größer
die Maschinendrehzahl n ist, eine desto höhere Zahl von
Funkendurchbrüchen wird über die Zündspule 17 und die
Zündkerze 18 in den Brennraum 12 gegeben. Damit dennoch
ein definierter Zündzeitpunkt angegeben werden kann,
erfolgen die Funkendurchbrüche in einem zeitlichen Abstand,
der kleiner als zweihundert Mikrosekunden ist.

Figur 2 ist ein Ausführungsbeispiel für eine Regelung der
Zahl z der Funkendurchbrüche. Die Brennkraftmaschine 11
umfaßt wieder den Brennraum 12 mit der Zündkerze 18 und
den Drehzahlsensor 13, der gegebenenfalls eine Bezugsmarke aufweist. Im Brennraum 12 ist wenigstens ein Brennraumsensor 21 angeordnet. Brennraumsensoren 21 können

0137939

R.

vorgesehen werden für die Aufnahme von Druck, Lichtemission oder Ionenstrom. Die Ausgänge der Sensoren 13
und 21 führen zu Eingängen eines Regelgeräts 22. Das
Regelgerät 22 umfaßt eine Speichervorrichtung 23 und
eine Zuordnungsvorrichtung 24. An den Ausgang des Regelgeräts 22 ist ein Zündgerät 25 angeschlossen, das
seinerseits mit der Zündkerze 18 in Wirkungsverbindung
steht.

Die Eingangsgrößen für das Regelgerät 22 sind außer der
Maschinendrehzahl n Angaben über den Gemischzustand.
Diese Angaben werden durch den Brennraumsensor oder die
Brennraumsensoren 21 geliefert. In der Speichervorrichtung
23 des Regelgeräts ist ein Stützkennfeld mit vorgegebenen
Sollwerten gespeichert. Mit diesen Sollwerten werden die
von den Sensoren 13 und 21 gelieferten Angaben verglichen.
Den Vergleich und die Verarbeitung der gewonnenen Werte
besorgt die Zuordnungsvorrichtung 24. Die Zuordnungsvorrichtung 24 arbeitet mit einem Regelalgorithmus für die
Zündung und bestimmt die Zahl der Funkendurchbrüche. Das
Ergebnis der Regelung des Ausführungsbeispiels nach
Figur 2 ist im Prinzip das gleiche wie das Ergebnis der
Steuerung in dem Ausführungsbeispiel nach Figur 1.
Die Zahl z der vom Regelgerät 22 bestimmten Funkendurchbrüche wird über das Zündgerät 25 an die Zündkerze 18
des Brennraums 12 weitergegeben.

Wie beschrieben wird im ersten Ausführungsbeispiel
nach Figur 1 der Zündspule 17 und im zweiten Ausführungsbeispiel nach Figur 2 dem Zündgerät 25 eine
Anzahl z von Impulsen für eine gleiche Zahl von Funkendurchbrüchen zugeführt. Bei den beiden Ausführungsbeispielen liegt z zwischen 1 und 10 für jeden Zündvorgang.
Damit bei jedem Zündvorgang die vom Steuergerät 16 oder
vom Regelgerät 22 geforderte Zahl von Funkendurchbrüchen
erreicht wird, arbeitet mit dem Steuergerät ein erster
Impulsvervielfacher 26 - Figur 1 - und mit dem Regelgerät 22 ein zweiter Impulsvervielfacher 27 - Figur 2 -
zusammen. Die Erzeugung mehrfacher Zündfunken zu einem
Zündzeitpunkt ist als Funkenbandzündung ausführlich in
der US-PS 3926 557 beschrieben.

0137939

R. ....23

07. Juli 1983  ch/dö

ROBERT BOSCH GMBH, 7000 STUTTGART 1

Verfahren und Einrichtung zum Zünden brennfähiger
Gemische

Ansprüche

1. Verfahren zum Zünden brennfähiger Gemische, insbesondere zum Erzeugen von Zündfunken für Brennkraftmaschinen, bei dem mit Hilfe einer Zündvorrichtung
Hochspannung erzeugt und damit ein Kondensator aufgeladen und zu einer vorbestimmbaren Zeit der Kondensator
über Zündelektroden, die von dem brennfähigen Gemisch
umgeben sind, entladen wird und bei dem die Energieabgabe im wesentlichen in der Durchbruchphase der
Angangsphase des Zündfunkens erfolgt, dadurch gekennzeichnet, daß die Zahl der Funkendurchbrüche je Zündvorgang in Abhängigkeit von Zustandsgrößen des Gemischs
gesteuert und/oder geregelt wird.

- 2 -

0137939

R.

2. Verfahren nach Anspruch 1 für eine Brennkraftmaschine, dadurch gekennzeichnet, daß die Steuerung/Regelung in Abhängigkeit von Betriebsparametern der Brennkraftmaschine erfolgt.

3. Verfahren nach Anspruch 1, dadurch gekennzeichnet, daß zum Zünden von mageren Gemischen eine Mehrzahl von Funkendurchbrüchen vorgesehen wird.

4. Verfahren nach Anspruch 1, dadurch gekennzeichnet, daß zum Zünden von fetten Gemischen ein einziger Funkendurchbruch vorgesehen wird.

5. Verfahren nach Anspruch 2, dadurch gekennzeichnet, daß bei Teillastbetrieb oder Leerlaufbetrieb oder Schubbetrieb zum Zünden des Gemischs eine Mehrzahl von Funkendurchbrüchen vorgesehen wird.

6. Verfahren nach Anspruch 2, dadurch gekennzeichnet, daß bei einem Betriebszustand im Bereich der Vollast zum Zünden des Gemischs ein einziger Funkendurchbruch vorgesehen ist.

7. Verfahren nach Anspruch 3 oder 5, dadurch gekennzeichnet, daß die Funkendurchbrüche in einem Abstand von weniger als zweihundert Mikrosekunden erfolgen.

8. Verfahren nach einem der vorhergehenden Ansprüche, dadurch gekennzeichnet, daß die Regelung der Zahl der Funkendurchbrüche wenigstens nach Maßgabe des Druckverlaufs und/oder des Verlaufs der Lichtemission und/oder des Ionenstromverlaufs im Gemisch erfolgt.

9. Verfahren nach einem der Ansprüche 2 bis 7 für eine Brennkraftmaschine, dadurch gekennzeichnet, daß die Steuerung der Zahl der Funkendurchbrüche wenigstens
nach Maßgabe des Lastzustands und/oder der Drehzahl
der Brennkraftmaschine erfolgt.

10. Einrichtung zum Durchführen des Verfahrens nach
Anspruch 8 für ein in einem Brennraum eingeschlossenes
brennfähiges Gemisch und mit einem Zündgerät, gekennzeichnet durch

- wenigstens einen Brennraumsensor (21),
- einen Drehzahlsensor (13), gegebenenfalls mit Bezugsmarkengeber,
- eine Speichervorrichtung (23) für ein Stützkennfeld
  mit vorgegebenen Sollwerten,
- eine Zuordnungsvorrichtung (24) mit einem Regelalgorithmus zum Bestimmen der Zahl der Funkendurchbrüche,
- Verbindungsleitungen zwischen dem (den) Brennraumsensor(en)
  (21), dem Drehzahlsensor (13), der Speichervorrichtung
  (23), der Zuordnungsvorrichtung (24) und dem Zündgerät
  (25).

11. Einrichtung zum Durchführen des Verfahrens nach
Anspruch 9 mit einem Zündgerät, gekennzeichnet durch

- einen Drehzahlsensor (13), gegebenenfalls mit Bezugsmarkengeber, und/oder
- einen Lastsensor (14) und/oder
- einen Temperatursensor (15),
- ein Steuergerät (16) zum Bestimmen der Zahl (z) der
  Funkendurchbrüche in Abhängigkeit von dem Wert der
  Drehzahl (n) und/oder der Last (P) und/oder der
  Temperatur (T),
- Verbindungsleitungen zwischen dem (den) Sensor(en)
  (13, 14, 15), dem Steuergerät (16) und dem Zündgerät (17).

Fig 1

Fig 2